# EUROPEAN PATENT SPECIFICATION

(11) **EP 2 284 070 B1**
(45) Date of publication and mention of the grant of the patent: **31.08.2011**
(21) Application number: 09166892.1
(22) Date of filing: 30.07.2009
(51) Int. Cl.: B62J 15/00

(54) **Roll-up bicycle fender**
Rollschutzblech für Fahrrad
Garde-boue enroulable de bicyclette

(43) Date of publication of application: 16.02.2011
(73) Proprietor: Sunny Wheel Industrial Co., Ltd., Changhua County 504, Taiwan (CN)
(72) Inventor: Lin, Chong-Jiang, 436, Taichung County (TW)
(74) Representative: Lang, Christian

(56) References cited:
- US-A- 741 997
- US-B1- 6 367 832

## Description

### BACKGROUND OF THE INVENTION

### Field of the Invention

The present invention relates to a bicycle fender, and more particularly to a roll-up bicycle fender.

### Description of the Prior Art

Nowadays, bicycling is one of the most popular recreations and sports activities, and has even become a daily transport means because of the fact that bicycling is not only environment friendly, good for health, easy to learn but also is suitable for all ages, sexes and figures. That's why the sales of bicycles increases and different kinds of peripheral products appear. The existing fenders, as one of the peripheral products of the bicycle, are mostly stereotyped and in the form a sheet member which is disposed close to the wheel to prevent the rider from getting splashed with mud or road debris. Furthermore, once the fenders are assembled on a bicycle, they will be difficult to disassemble.

In document US 741,997 A a roll-up mud-guard is disclosed. The mud-guard is secured on a fork of a bike and comprises a case including ratchet -wheels supporting a drum. A ribbon is wounded around the drum. For using the mud-guard the ribbon is unwound.

Furthermore, in document US 6,367,832 B1 another bike fender is disclosed. The bike fender includes a housing for covering the fender-element which can be extracted from the housing by a hand operated drum.

The present invention has arisen to mitigate and/or obviate the afore-described disadvantages.

### SUMMARY OF THE INVENTION

The primary object of the present invention is to provide a roll-up bicycle fender which can be pulled out when in use and rolled up when not in use.

To achieve the above object, a roll-up bicycle fender in accordance with the present invention defined in claim 1 comprises: a mounting device, a locking member and a fender assembly. The mounting device includes a mounting piece to be mounted on a bicycle.
The locking member is pivotally disposed on the mounting piece. The fender assembly includes a cylinder member and a fender main body, the cylinder member is axially provided in its outer surface with a slot, the cylinder member is positioned in the locking member, the fender main body includes a laminate piece which has one end received in the cylinder member and has the other end extended out of the slot. The laminate piece can be pulled out into an operative position by pulling the other end of the laminate piece, and the fender assembly can also be pivoted to a position to reduce the wind resistance of the bicycle when it is not in use.

### BRIEF DESCRIPTION OF THE DRAWINGS

Fig. 1 is an exploded view of a roll-up bicycle fender in accordance with the present invention;
Fig. 2 is an assembly view of the roll-up bicycle fender in accordance with the present invention;
Fig. 3 shows an assembly view of the roll-up bicycle fender in accordance with the present invention, wherein the fender assembly is pivoted; and
Fig. 4 shows the roll-up bicycle fender in accordance with the present invention when it is mounted on a bicycle.

### DETAILED DESCRIPTION OF THE PREFERRED EMBODIMENT

The present invention will be clearer from the following description when viewed together with the accompanying drawings, which show, for purpose of illustrations only, the preferred embodiment in accordance with the present invention.

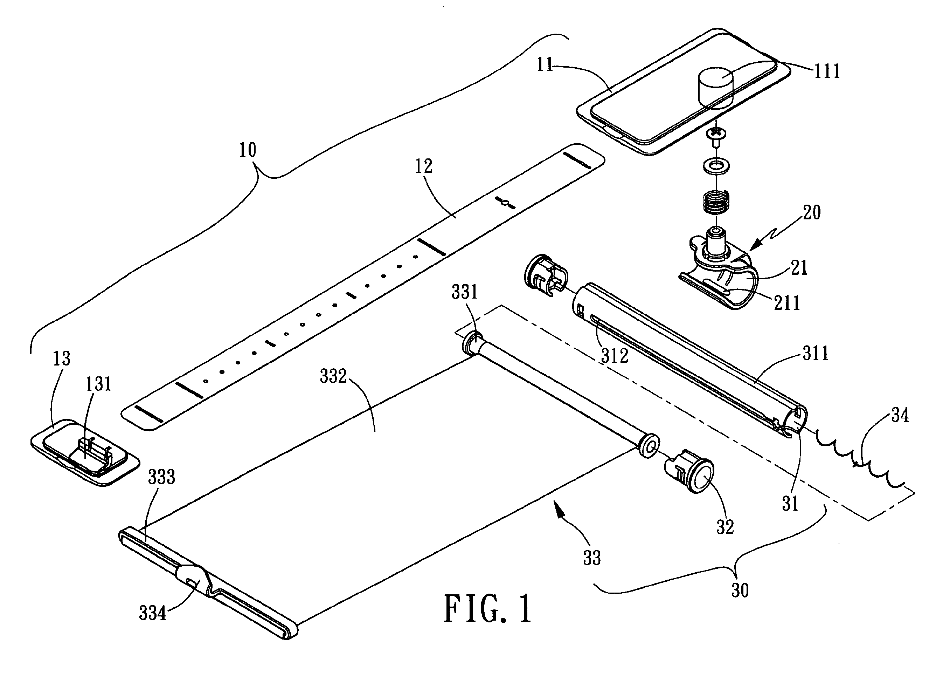

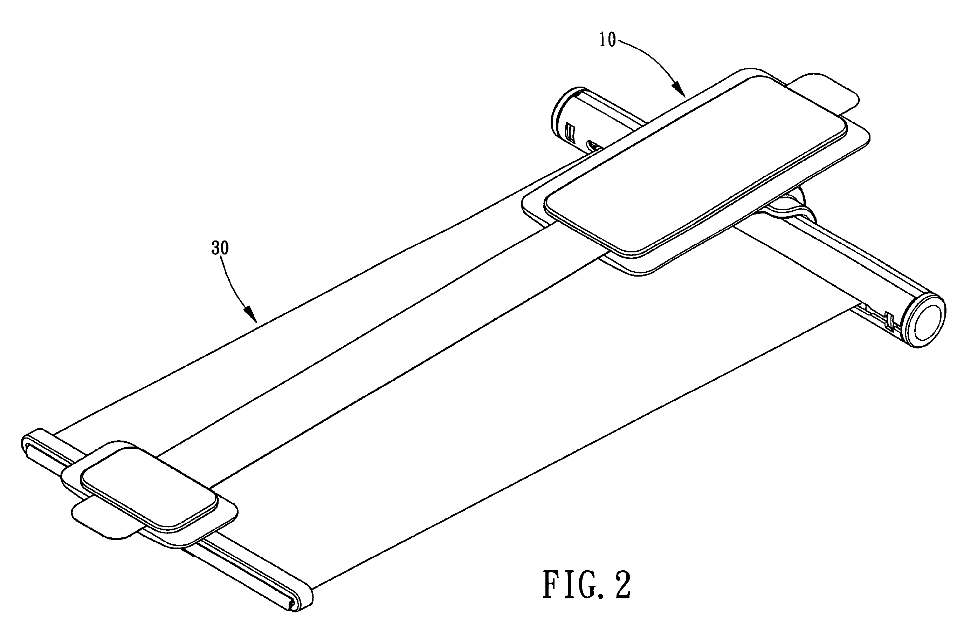

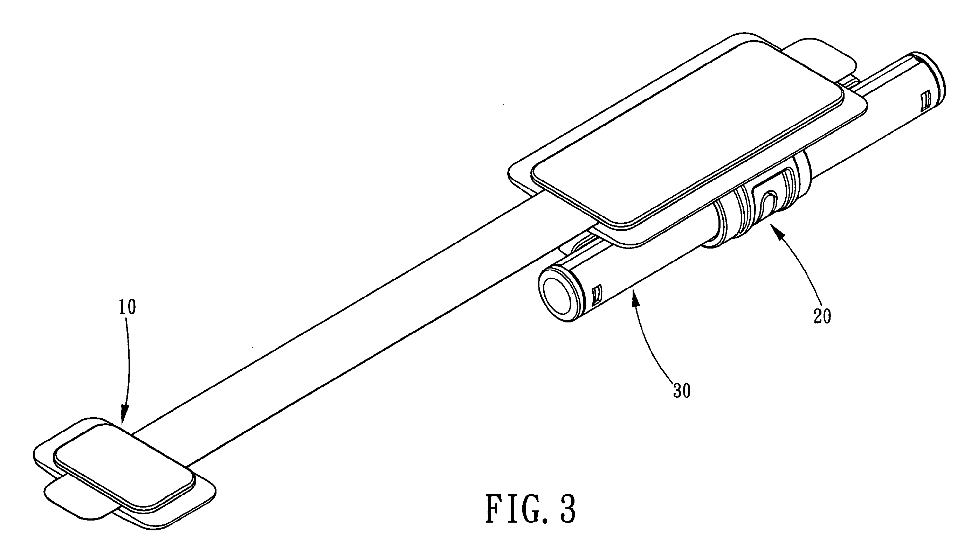

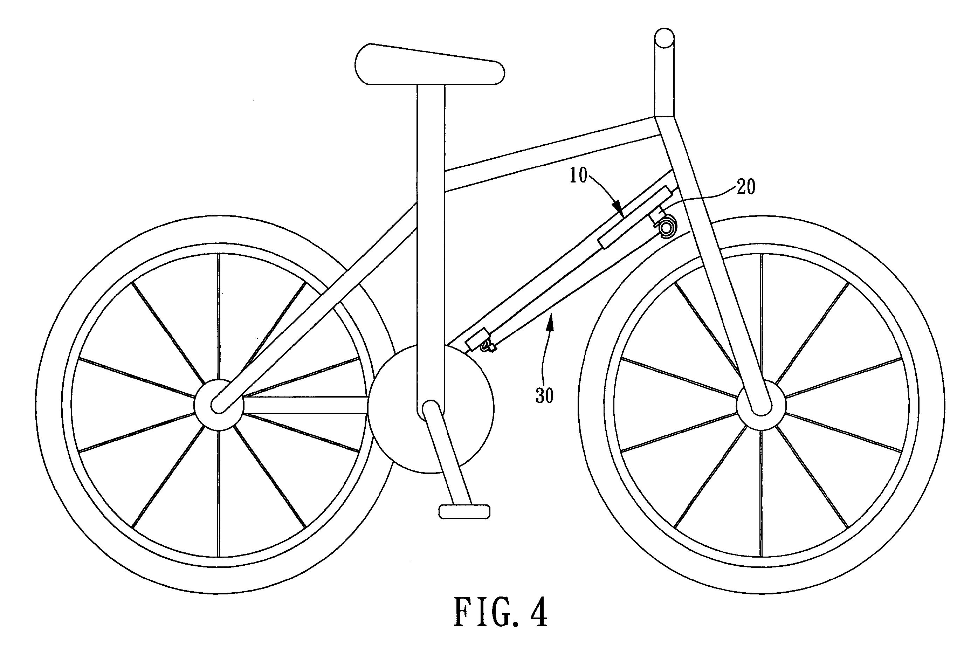

Referring to Figs. 1-4, a roll-up bicycle fender in accordance with the present invention is mounted on a bicycle having a plurality of frame pipes and comprises: a mounting device 10, a locking member 20, and a fender assembly 30.

The mounting device 10 includes a mounting piece 11, an elongated piece 12 and a positioning piece 13. The mounting piece 11 is provided with a mounting portion 111. The elongated piece 12 has one end connected to the mounting piece 11 and the other end connected to the positioning piece 13. The positioning piece 13 has a hook portion 131, and the mounting piece 11 can be mounted on different shaped and sized pipes of a bicycle frame in a folded manner.

The locking member 20 is pivotally disposed on the mounting portion 111 of the mounting piece 11 and formed with a hook portion 21, and the inner surface of the hook portion 21 is formed with a positioning rib 211.

The fender assembly 30 includes a cylinder member 31, two end caps 32, a fender main body 33 and an elastic member 34. The cylinder member 31 includes two open ends covered by the two end caps 32 and is axially provided in its outer surface with an engaging groove 311 for engaging with the positioning rib 211 of the locking member 20 and a slot 312 which is in communication with one open end of the cylinder member 31. The fender main body 33 includes a rotary shaft 331, a laminate piece 332 and a pull member 333. The laminate piece 332 is located between a rider and the wheels of the bicycle and has one end connected to the rotary shaft 331 and can be rolled up around it. The rotary shaft 331 is received in the cylinder member 31 in such a manner that the other end of the laminate piece 332, which has a free end, extends out of the slot 312 of the cylinder member 31. The pull member 333 is fixed to the free end of the laminate piece 332 so as to make the free end of the laminate piece 332 to stay outside the cylinder member 31 and to allow a user to pull out the laminate piece 332 by pulling the pull member 333. The pull member 333 is formed with a hook 334 which is to be hooked to the hook portion 131 of the positioning piece 13 after the laminate piece 332 is pulled out, so as to maintain the laminate piece 332 in a pulled-out position. The elastic member 34 has one end fixed to one of the end caps 32 and the other end is connected to the rotary shaft 331. Pulling out the laminate piece 332 causes the rotation of the rotary shaft 331 and makes the elastic member 34 to compress since the elastic member 34 will rotate along with the rotation of the rotary shaft 331. After releasing the laminate piece 332, the elastic member 34 will be decompressed and make the laminate piece 332 to return to retracted state.

The mounting piece 11 and the positioning piece 13 can be folded or deformed to adapt to the frame pipe of the bicycle and then are fixed thereon by double adhesive tape or hook and loop tape, which allows the mounting device 10 to be fixed at any desired part of the bicycle. The fender assembly 30 is positioned on the locking member 20 through the engagement of the engaging groove 311 of the cylinder member 31 and the positioning rib 211. To use the fender assembly 30, the cylinder member 31 can be adjusted to make the slot 312 face toward the positioning piece 13 of the mounting device 10, and the laminate piece 332 is pulled out by pulling the pull member 333 of the fender main body 33 until the hook 334 of the pull member 333 is hooked to the hook portion 131 of the positioning piece 13, so that the laminate piece 332 is maintained in a pulled-out (operative) position without retracting into the cylinder member 31, and the pulled-out laminate piece 332 can serve as a fender to protect rider from dust, mud and road debris.

To roll up the fender assembly 30, the hook 334 of the pull member 333 can be detached from the hook portion 131 of the positioning piece 13, then the laminate piece 332 of the fender main body 33 will be retracted into the cylinder member 31 of the fender assembly 30 and rolled up around the rotary shaft 331 of the fender main body 33 in such a manner that the pull member 333 at the free end of the laminate piece 332 will be stopped outside the slot 312 of the cylinder member 31 to prevent the laminate piece 332 disappearing completely into to the cylinder member 31 and also to allow for easy pulling-out of the laminate piece 332 again when needed. When the fender main body 33 is changed from operative position to retracted position, the slot 312 of the cylinder member 31 still faces toward the positioning piece 13 of the mounting device 10 while the axial direction of the cylinder member 31 of the fender assembly 30 is different from the extension direction of the mounting device 10, which will increase the width of the fender. Hence, it will occupy a lot of space when the fender assembly 30 is not in use and will increase the wind resistance of the bicycle. At this moment, the locking member 20 can be rotated to adjust the axial direction of the cylinder member 31 of the fender assembly 30 to the extension direction of the mounting device 10, so as to reduce the width of the fender and the wind resistance caused by the fender assembly 30. Since the fender assembly 30 is detachably engaged in the locking member 20, when a bicycle is parked in an open space or somewhere the user can't see it, the user can remove the fender assembly 30 from the locking member 20 so as to prevent it from being stolen or exposed to the elements. Furthermore, the fender assembly 30 is easily portable since the laminate piece 332 of the fender main body 33 has been rolled up into the cylinder member 31. Or, if the mounting device 10 is mounted on the bicycle by loop and hoop tape, then the fender as a whole can be removed from the bicycle.

While we have shown and described various embodiments in accordance with the present invention, it is clear to those skilled in the art that further embodiments may be made without departing from the scope of the present invention defined in the appended claims.

## Claims

1. A roll-up bicycle fender comprising:
a mounting device (10) including a mounting piece (11) which can be mounted on one of frame pipes of a bicycle;
a locking member (20) pivotally disposed on the mounting piece (11); and
a fender assembly (30) including a cylinder member (31) and a fender main body (33), the cylinder member (31) being axially provided in its outer surface with a slot (312), the cylinder member (31) is positioned in the locking member (20) the fender main body (33) including a laminate piece (332) which can be located between a rider and wheels of the bicycle, the laminate piece (332) having one end received in the cylinder member (31) and the other end extended out of the slot (312), the rider can pull out the laminate piece (332) by pulling the other end of the laminate piece (332),
wherein, when the laminate piece (332) is rolled up and retracted into the cylinder member (31), an axial direction of the cylinder member (31) of the fender assembly (30) is allowed to be adjusted to reduce a wind resistance caused by the fender assembly (30); and
wherein the mounting piece (11) of the mounting device (10) is connected to a positioning piece (13) which is provided with a hook portion (131), and a pull member (333) is provided with a hook (334) to be hooked to the hook portion (131) of the positioning piece (13).

2. The roll-up bicycle fender as claimed in claim 1, wherein the mounting device (10) is mounted on one of the frame pipes.

3. The roll-up bicycle fender as claimed in claim 1, wherein the locking member (20) is formed with a hook portion (21) in which the cylinder member (31) is engaged.

4. The roll-up bicycle fender as claimed in claim 3, wherein a positioning rib (211) is formed in an inner surface of the hook portion (21) of the locking member (20) and the cylinder member (31) is axially provided in its outer surface with an engaging groove (311) for engaging with the positioning rib (211) of the locking member (20).

5. The roll-up bicycle fender as claimed in claim 1, wherein the fender main body (33) further includes a rotary shaft (331), the laminate piece (332) has the one end connected to the rotary shaft (331) and is rolled up around it, and the rotary shaft (331) is received in the cylinder member (31).

6. The roll-up bicycle fender as claimed in claim 5, wherein the fender assembly (30) further includes an elastic member (34) which has one end fixed to the cylinder member (31) and the other end is connected to the rotary shaft (331).

7. The roll-up bicycle fender as claimed in claim 1, wherein the fender assembly (60) further includes two end caps (32) which are disposed at both ends of the cylinder member (31).

8. The roll-up bicycle fender as claimed in claim 1, wherein the fender main body (33) further comprises a rotary shaft (331), and the laminate piece (332) is rolled up around the rotary shaft (331) and received in the cylinder member (31).

9. The roll-up bicycle fender as claimed in claim 1, wherein the pull member (333) is disposed at the other end of the laminate piece (332) to make the other end of the laminate piece (332) to stay outside the cylinder member (31).

10. The roll-up bicycle fender as claimed in claim 1, wherein the mounting piece (11) is provided with a mounting portion (111), an elongated piece (12) has one end connected to the mounting piece (11) and the other end is connected to the positioning piece (13), and the locking member (20) is pivoted to the mounting portion (111).

## Patentansprüche

1. Aufrollbarer Spritzschutz für Fahrräder umfassend:
eine Montagevorrichtung (10), die ein Montageteil (11) umfasst, welches an einem Rahmenrohr eines Fahrrades befestigt werden kann,
ein Verriegelungsteil (20), dass drehbar an dem Montageteil (11) angeordnet ist, und
eine Spritzschutzanordnung (30), die ein Zylinderteil (31) und einen Spritzschutzhauptkörper (33) umfasst, wobei das Zylinderteil (31) axial in einer seiner Außenflächen mit einem Schlitz (312) versehen ist, wobei das Zylinderteil (31) in dem Verriegelungsteil (20) positioniert ist, wobei der Spritzschutzhauptkörper (33) eine Laminatstück (332) umfasst, welches zwischen einem Fahrer und den Rädern des Fahrrads angeordnet sein kann, wobei das eine Ende des Laminatstücks (332) in dem Zylinderteil (31) aufgenommen ist und das andere Ende sich aus dem Schlitz (312) heraus erstreckt, wobei der Fahrer das Laminatstück (332) durch Ziehen des anderen Endes des Laminatstücks (332) herausziehen kann,
wobei, wenn das Laminatstück (332) aufgerollt und in das Zylinderteil (31) zurückgezogen ist, die axial Richtung des Zylinderstücks (31) der Spritzschutzanordnung (30) verstellt werden kann, um den durch die Spritzschutzanordnung (30) verursachten Windwiderstand zu reduzieren, und
wobei das Montageteil (11) der Montagevorrichtung (10) mit einem Positionierteil (13) verbunden ist, welches mit einem Hakenabschnitt (131) versehen ist, und wobei ein Ziehteil (333) mit einem Haken (334) zum Einhaken in den Hakenabschnitt (131) des Positionierteils (13) versehen ist.

2. Aufrollbarer Spritzschutz für Fahrräder nach Anspruch 1, wobei die Montagevorrichtung (10) an eines der Rahmenrohre montiert ist.

3. Aufrollbarer Spritzschutz für Fahrräder nach Anspruch 1, wobei das Verriegelungsteil (20) mit einem Hakenabschnitt (21) ausgebildet ist, in welchen das Zylinderteil (31) eingreift.

4. Aufrollbarer Spritzschutz für Fahrräder nach Anspruch 3, wobei eine Positionierrippe (211) auf einer Innenfläche des Hakenabschnitts (21) des Verriegelungsteils (20) ausgebildet ist und wobei das Zylinderteil (31) axial auf einer Außenfläche mit einer Eingreifnut (311) versehen ist, um in die Positionierrippe (211) des Verriegelungsteils (20) einzugreifen.

5. Aufrollbarer Spritzschutz für Fahrräder nach Anspruch 1, wobei der Spritzschutzhauptkörper (33) ferner einen drehbaren Schaft (331) umfasst, wobei das eine Ende des Laminatstücks (332) mit dem drehbaren Schaft (331) verbunden ist und um diesen herum aufgewickelt ist, und wobei der drehbare Schaft (331) in dem Zylinderteil (31) aufgenommen ist.

6. Aufrollbarer Spritzschutz für Fahrräder nach Anspruch 5, wobei die Spritzschutzanordnung (30) ferner ein elastisches Teil (34) umfasst, dessen eines Ende an dem Zylinderteil (31) befestigt ist und dessen anderes Ende mit dem drehbaren Schaft (331) verbunden ist.

7. Aufrollbarer Spritzschutz für Fahrräder nach Anspruch 1, wobei die Spritzschutzanordnung (30) ferner zwei Kappen (32) umfasst, die an beiden Enden des Zylinderteils (31) angeordnet sind.

8. Aufrollbarer Spritzschutz für Fahrräder nach Anspruch 1, wobei der Spritzschutzhauptkörper (33) ferner einen drehbaren Schaft (331) umfasst und wobei das Laminatstück (332) um den drehbaren Schaft (331) herum aufgewickelt ist und in das Zylinderteil (31) aufgenommen ist.

9. Aufrollbarer Spritzschutz für Fahrräder nach Anspruch 1, wobei das Ziehteil (333) an dem anderen Ende des Laminatstücks (332) angeordnet ist, um zu bewirken, dass das andere Ende des Laminatstücks (332) außerhalb des Zylinderteils (31) bleibt.

10. Aufrollbarer Spritzschutz für Fahrräder nach Anspruch 1, wobei das Montageteil (11) mit einem Montageabschnitt (111) versehen ist, wobei ein verlängertes Teil (12) mit einem Ende mit dem Montageteil (11) verbunden ist und mit dem anderen Ende mit dem Positionierteil (13) verbunden ist, und wobei das Verriegelungsteil (20) gegenüber dem Montageabschnitt (111) verdreht ist.

## Revendications

1. Garde-boue enroulable de bicyclette comprenant :
un dispositif de montage (10) comprenant une pièce de montage (11) qui peut être montée sur l'un des tubes du cadre d'une bicyclette ;
un élément de blocage (20) placé de manière pivotante sur la pièce de montage (11) et
un ensemble de garde-boue (30) comprenant un élément de cylindre (31) et un corps principal de garde-boue (33), l'élément de cylindre (31) étant pourvu axialement dans sa surface extérieure d'une fente (312), l'élément de cylindre (31) est positionné dans l'élément de blocage (20), le corps principal du garde-boue (33) comprenant une pièce laminée (332) qui peut être située entre un cycliste et les roues de la bicyclette, la pièce laminée (332) ayant une extrémité logée dans l'élément de cylindre (31) et l'autre extrémité sortie de la fente (312), le cycliste peut faire sortir la pièce laminée (332) en tirant l'autre extrémité de la pièce laminée (332),
dans lequel, lorsque la pièce laminée (332) est enroulée et escamotée dans l'élément de cylindre (31), une direction axiale de l'élément de cylindre (31) de l'ensemble de garde-boue (30) peut être ajustée pour réduire une résistance au vent causée par l'ensemble de garde-boue (30) et
dans lequel la pièce de montage (11) du dispositif de montage (10) est reliée à une pièce de positionnement (13) qui est pourvue d'une portion à crochet (131) et un élément de traction (333) est pourvu d'un crochet (334) à accrocher à la portion à crochet (131) de la pièce de positionnement (13).

2. Garde-boue enroulable de bicyclette selon la revendication 1 dans lequel le dispositif de montage (10) est monté sur l'un des tubes de cadre.

3. Garde-boue enroulable de bicyclette selon la revendication 1 dans lequel l'élément de blocage (20) est formé avec une portion à crochet (21) dans laquelle l'élément de cylindre (31) est en prise.

4. Garde-boue enroulable de bicyclette selon la revendication 3 dans lequel une nervure de positionnement (211) est formée dans une surface intérieure de la portion à crochet (21) de l'élément de blocage (20) et l'élément de cylindre (31) est pourvu axialement dans sa surface extérieure d'une rainure de mise en prise (311) pour se mettre en prise avec la nervure de positionnement (211) de l'élément de blocage (20).

5. Garde-boue enroulable de bicyclette selon la revendication 1 dans lequel le corps principal de garde-boue (33) comprend de plus un arbre rotatif (331), la pièce laminée (332) a l'une de ses extrémités reliée à l'arbre rotatif (331) et est enroulée autour de celui-ci et l'arbre rotatif (331) est logé dans l'élément de cylindre (31).

6. Garde-boue enroulable de bicyclette selon la revendication 5 dans lequel l'ensemble de garde-boue (30) comprend de plus un élément élastique (34) qui a une extrémité fixée à l'élément de cylindre (31) et l'autre extrémité est reliée à l'arbre rotatif (331).

7. Garde-boue enroulable de bicyclette selon la revendication 1 dans lequel l'ensemble de garde-boue (30) comprend de plus deux capuchons d'extrémité (32) qui sont placés aux deux extrémités de l'élément de cylindre (31).

8. Garde-boue enroulable de bicyclette selon la revendication 1 dans lequel le corps principal de garde-boue (33) comprend de plus un arbre rotatif (331) et la pièce laminée (332) est enroulée autour de l'arbre rotatif (331) et logée dans l'élément de cylindre (31).

9. Garde-boue enroulable de bicyclette selon la revendication 1 dans lequel l'élément de traction (333) est placé à l'autre extrémité de la pièce laminée (332) pour faire rester l'autre extrémité de la pièce laminée (332) à l'extérieur de l'élément de cylindre (31).

10. Garde-boue enroulable de bicyclette selon la revendication 1 dans lequel la pièce de montage (11) est pourvue d'une portion de montage (111), une pièce allongée (12) a une extrémité reliée à la pièce de montage (11) et l'autre extrémité est reliée à la pièce de positionnement (13) et l'élément de blocage (20) est pivoté vers la portion de montage (111).
